# EUROPEAN PATENT APPLICATION

(11) **EP 3 220 396 A1**
(43) Date of publication of application: **20.09.2017**
(21) Application number: 16187191.8
(22) Date of filing: 05.09.2016
(51) Int. Cl.: H01F 1/059, H01F 1/055, H01F 7/02, B22F 3/16, B22F 9/04, B22F 9/16, C22C 38/00, C22C 38/02, C22C 38/04, C22C 38/06, C22C 38/08, C22C 38/10, C22C 38/12, C22C 38/14, C22C 38/16, C22C 38/18

(54) **PERMANENT MAGNET, ROTARY ELECTRICAL MACHINE, AND VEHICLE**

(30) Priority: 18.03.2016 JP 2016055742
(71) Applicant: Kabushiki Kaisha Toshiba, Tokyo 105-8001 (JP)
(72) Inventor: Sanada, Naoyuki, Tokyo, 105-8001 (JP); Sakurada, Shinya, Tokyo, 105-8001 (JP); Yamashita, Tomohiro, Tokyo, 105-8001 (JP)
(74) Representative: Hoffmann Eitle

(57) **Abstract**

In one embodiment, a permanent magnet has a composition expressed by a composition formula: RNₓ(CrₚSi_{q}M_{1-p-q})_{z} (R is at least one element selected from Y and rare-earth elements, M is at least one element selected from Fe and Co, and x, p, q, and z are atomic ratios satisfying 0.5≤x ≤ 2.0, 0.005 ≤p ≤ 0.2, 0.005 ≤q ≤0.2, and 4 ≤ z ≤ 13, respectively). The permanent magnet has a density of 6.5 g/cm³ or more and satisfies the relationship of I(110)/{I(110) +I(303)} ≤ 0.05, in which I(303) represents a diffraction peak intensity from a (303) plane of a Th₂Zn₁₇ phase obtained through powder X-ray diffraction of the permanent magnet, and I(110) represents a diffraction peak intensity from a (110) plane of an α-Fe phase obtained through the powder X-ray diffraction.

## Description

### FIELD

Embodiments discribed herein relate generally to a permanent magnet, a rotary electrical machine, and a vehicle.

### BACKGROUND

Rare-earth magnets, such as a Sm-Co magnet and a Nd-Fe-B magnet, are known as high-performance permanent magnets. Rare-earth magnets are used in electrical apparatuses, such as a motor, a speaker, and a measuring device, and are also used in vehicles, such as a hybrid electric vehicle (HEV) and an electric vehicle (EV). Nowadays, there is an increasing demand for the reduction in size of various electrical apparatuses, and there is also an increasing demand for motors to be used in HEVs and EVs. To address such demands, development of a permanent magnet that aims to improve the maximum magnetic energy product (BHmax) is expected.

With regard to magnet materials for obtaining a higher-performance permanent magnet, a combination of a rare-earth element and a transition-metal element, such as Fe, is highly promising. Sm-FeN materials have high saturation magnetization comparable to that of Nd-Fe-B materials and large magnetic anisotropy exceeding that of Nd-Fe-B materials. Thus, the application of Sm-Fe-N materials in a high-performance magnet is expected. However, Sm-Fe-N magnet materials suffer from a disadvantage in that they undergo thermal decomposition upon being heated at a temperature of approximately 550°C or higher. Therefore, Sm-Fe-N materials cannot be densified by sintering.

In this respect, replacing part of Fe in the Sm-Fe-N magnet material with Cr and Si to raise the thermal decomposition temperature is being proposed. A Sm-(Fe,Cr,Si)-N permanent magnet has high saturation magnetization, large magnetic anisotropy, and a high thermal decomposition temperature, and thus its application is expected. However, trying to obtain a Sm-(Fe,Cr,Si)-N permanent magnet having a high sintered density leads to the thermal decomposition of the Sm-(Fe,Cr,Si)-N permanent magnet, and an α-Fe phase that does not exhibit a coercive force precipitates. Therefore, there is a demand for a Sm-(Fe,Cr,Si)-N permanent magnet that retains a high sintered density and has a low amount of α-Fe phase precipitation.

### RELEVANT REFERENCE

### Patent Reference

Reference 1: JPA 2002-313614

### SUMMARY

An object of the embodiment is to provide a Sm-(Fe,Cr,Si)-N type permanent magnet having a high density and a low amount of α-Fe phase, and a rotary electrical machine and a vehicle.

According to one embodiment, a permanent magnet having a composition expressed by a composition formula (1): RNₓ(CrₚSi_{q}M_{l-p-q})_{z} is provided. In the composition formula (1), R is at least one element selected from a first group consisting of Y and rare-earth elements, M is at least one element selected from a second group consisting of Fe and Co, x is an atomic ratio satisfying 0.5 ≤ x ≤ 2.0, p is an atomic ratio satisfying 0.005 ≤ p ≤ 0.2, q is an atomic ratio satisfying 0.005 ≤ q ≤ 0.2, and z is an atomic ratio satisfying 4 ≤ z ≤ 13. The permanent magnet of the embodiment has a density of 6.5 g/cm³ or more and satisfies a relationship of I(110)/{I(110) + I(303)} < 0.05, in which I(303) represents a diffraction peak intensity from a (303) plane of a Th₂Zn₁₇ phase obtained through powder X-ray diffraction of the permanent magnet and I(110) represents a diffraction peak intensity from a (110) plane of an α-Fe phase obtained through the powder X-ray diffraction.

### BRIEF DESCRIPTION OF THE DRAWINGS

Fig. 1 illustrates a motor of an embodiment.
Fig. 2 illustrates a variable magnetic flux motor of an embodiment.
Fig. 3 illustrates an electric generator of an embodiment.
Fig. 4 illustrates an example of a powder X-ray diffraction profile of a permanent magnet of an embodiment.

### DETAILED DESCRIPTION

Hereinafter, a permanent magnet, a rotary electrical machine, and a vehicle of embodiments will be described with reference to the drawings. It is to be noted that substantially identical constituent elements are given identical reference characters and descriptions thereof may partially be omitted in the embodiments. The drawings are schematic or conceptual, and the relationship between the thickness and the width of each part, the ratio of the sizes of some parts, and so on do not necessarily match the actual ones. Even when an identical part is referred to, its dimensions or ratio may differ in different drawings.

### (First Embodiment)

A permanent magnet of an embodiment will be described. The permanent magnet of the embodiment has a composition expressed by the composition formula (1). In the composition formula (1), the element R is at least one element selected from a first group consisting of Y and rare-earth elements. As the element R, one type of element may be used, or a plurality of types of elements may be used. Y and rare-earth elements provide the magnet with large magnetic anisotropy and a high coercive force. It is preferable that 50 atomic% or more of a amount of the element R be Sm, and it is desirable that 70 atomic% or more thereof be Sm. The use of a rare-earth element including Sm in the element R can enhance the performance of the permanent magnet and in particular can enhance the coercive force with high reproducibility.

Nitrogen (N) is present mainly at an interstitial position on a main phase in a crystal. When the crystal structure of the composition formula (1) excluding N includes nitrogen, the crystal lattice is enlarged, and the electron structure changes. The Curie temperature, the magnetic anisotropy, and the saturation magnetization of the permanent magnet improve. The atomic ratio of nitrogen is 0.5 or more and 2.0 or less when the atomic ratio of the element R is 1. In other words, the value of x is 0.5 or more and 2.0 or less. It is preferable that x be 1.0 or more and 1.5 or less. When the atomic ratio x of nitrogen with respect to the element R is less than 0.5, the effect of the structure containing nitrogen cannot be fully achieved. When the atomic ratio x of nitrogen exceeds 2.0, the saturation magnetization and so on of the permanent magnet decrease.

Part of nitrogen may be replaced with at least one element X selected from a fourth group consisting of hydrogen (H), boron (B), and carbon (C). As this replacing element X, one type of element may be used, or a plurality of types of elements may be used. The element X achieves an effect similar to that of nitrogen described above. However, replacing too much of nitrogen leads to a decrease in the magnetic anisotropy or the like of the permanent magnet. It is preferable that the amount of nitrogen to be replaced with the element X be 50 atomic% or less of nitrogen.

The element M is at least one element selected from a second group consisting of iron (Fe) and cobalt (Co). As the element M, one type of element may be used, or a plurality of types of elements may be used. The element M is mainly an element that magnetizes the permanent magnet. As the content of the element M is relatively high, the saturation magnetization of the permanent magnet can be increased. However, when the content of the element M is too high, an α-Fe phase precipitates, and the coercive force thus decreases. The atomic ratio of the element M is 4 or more and 13 or less when the atomic ratio of the element R is 1. In other words, the value of z is 4 or more and 13 or less. It is preferable that z be 6 or more and 9 or less. When the atomic ratio z of the element M with respect to the element R is less than 4, the saturation magnetization of the permanent magnet cannot be increased sufficiently. When the atomic ratio z of the element M exceeds 13, an increased amount of α-Fe phase precipitates, and the coercive force thus decreases.

It is preferable that 50 atomic% or more of a amount of the element M be Fe, and it is desirable that 70 atomic% or more thereof be Fe. Of the element M, Fe in particular contributes to improving the magnetization of the permanent magnet. As the permanent magnet contains Co as part of the M element, the Curie temperature of the permanent magnet rises. Thus, the thermal stability of the permanent magnet improves, and the coercive force of the permanent magnet further increases.

Furthermore, part of the M element may be replaced with at least one element A selected from a third group consisting of titanium (Ti), zirconium (Zr), hafnium (Hf), vanadium (V), niobium (Nb), tantalum (Ta), molybdenum (Mo), tungsten (W), manganese (Mn), nickel (Ni), copper (Cu), zinc (Zn), aluminum (Al), gallium (Ga), and germanium (Ge). As the replacing element A, one type of element may be used, or a plurality of types of elements may be used. The element A that replaces part of the M element contributes to improving the magnetic characteristics, such as the coercive force. However, replacing too much of the element M leads to a decrease in the magnetization of the permanent magnet. It is preferable that the element A that replaces part of the element M be 20 atomic% or less of the element M, and it is more preferable that the replacing element A be 10 atomic% or less of the element M.

Chromium (Cr) or silicon (Si) is a component that raises the thermal decomposition temperature of an R-M-N permanent magnet. Chromium (Cr) or silicon (Si) mainly replaces a site occupied by the element M in the main phase. Cr causes the d electron count within a crystal of the permanent magnet to change and thus increases the thermal stability of the crystal. Si causes the crystal lattice size to decrease and thus increases the thermal stability of the crystal. As Cr and Si are both present in the crystal of the permanent magnet, the thermal stability of the R-M-N permanent magnet improves, and the application of a sintering process becomes possible.

The content of Cr in the permanent magnet is 0.5 atomic% or more and 20 atomic% or less with respect to the total content of the element M, Cr, and Si. When the content of Cr is too low, the effect cannot be fully achieved. When the content of Cr is too high, this leads to a decrease in the saturation magnetization or the like of the permanent magnet. It is preferable that the content of Cr be 3 atomic% or more and 18 atomic% or less with respect to the total content of the element M, Cr, and Si, and it is more preferable that the content of Cr be 5 atomic% or more and 15 atomic% or less.

The content of Si in the permanent magnet is 0.5 atomic% or more and 20 atomic% or less with respect to the total content of the element M, Cr, and Si. When the content of Si is too low, the effect associated with Si being contained cannot be fully achieved. When the content of Si is too high, this leads to a decrease in the saturation magnetization or the like of the permanent magnet. It is preferable that the content of Si be 1 atomic% or more and 15 atomic% or less with respect to the total content of the element M, Cr, and Si, and it is more preferable that the content of Si be 1 atomic% or more and 10 atomic% or less. It is preferable that the total content of Cr and Si be 5 atomic% or more and 20 atomic% or less with respect to the total content of the element M, Cr, and Si, and it is more preferable that the total content of Cr and Si be 8 atomic% or more and 15 atomic% or less.

The permanent magnet having a composition expressed by the formula (1) can be obtained by subjecting an alloy powder having a composition expressed by a formula (2) to nitriding.

Composition formula: R(CrₚSi_{q}M_{l-p-q})_{z}... (2)

In the composition formula (2), the atomic ratio z that represents the ratio of the total content of the metals (M, Cr, Si) other than the element R relative to the element R is 4 or more and 13 or less; p is an atomic ratio satisfying 0.005 or more and 0.2 or less; and q is an atomic ratio satisfying 0.005 or more and 0.2 or less. By subjecting the alloy powder having a composition such as the one in the formula (2) to desired nitriding, a permanent magnet having a composition as in the formula (1) and having an R(M,Cr,Si)₁₇Nₓ phase as a main phase can be obtained.

The composition analysis of the permanent magnet is carried out through inductively coupled plasma (ICP) atomic emission spectroscopy. In the composition analysis of the permanent magnet, a powder (alloy powder) that is obtained by pulverizing the magnet with a jet mill, a ball mill, or the like and in which powder having a particle size of no less than 10 µm amounts to no more than 3% by volume of the total is used. The obtained powder is sampled ten times at random, and the obtained samples are analyzed. A mean value of the analyzed measured values excluding the maximum value and the minimum value serves as the composition of the permanent magnet.

The permanent magnet of the embodiment has a density of 6.5 g/cm³ or more. In addition, the permanent magnet of the embodiment satisfies the relationship of I(110)/{I(110) + I(303)} ≤ 0.05, in which I(303) represents a diffraction peak intensity from a (303) plane of a Th₂Zn₁₇ phase derived from a Th₂Zn₁₇N₃ phase obtained through the powder X-ray diffraction of the permanent magnet and I(110) represents a diffraction peak intensity from a (110) plane of an α-Fe phase obtained through the powder X-ray diffraction. When the permanent magnet has a density of 6.5 g/cm³ or more and the peak intensity ratio of I(110)/{I(110) + I(303)} obtained through the powder X-ray diffraction is 0.05 or less, high saturation magnetization and a large coercive force can be obtained.

When the density (sintered density) is 6.5 g/cm³ or more, a high-density sintered magnet having an R(M,Cr,Si)₁₇Nₓ phase as a main phase can be provided. When the density is less than 6.5 g/cm³, the magnetization or the coercive force of the permanent magnet (sintered magnet) decreases. Furthermore, when the peak intensity ratio of I(110)/{I(110) + I(303)} is 0.05 or less, precipitation of an α-Fe phase is suppressed, and a high-density sintered magnet having a substantially homogeneous R(M,Cr,Si)₁₇Nₓ phase can be provided. When the above-described peak intensity ratio exceeds 0.05 and the amount of precipitated α-Fe phase increases, the coercive force of the permanent magnet (sintered magnet) decreases. The permanent magnet of the embodiment provides a sintered magnet that has a high density and in which precipitation of an α-Fe phase is suppressed. As will be described later in detail, such a sintered magnet can be obtained by applying spark plasma sintering in the sintering process and by setting the rate of heating/cooling in that process so as to produce a relatively gentle temperature change.

The permanent magnet of the embodiment is manufactured, for example, in the following manner. First, an alloy powder containing a predetermined amount of elements is manufactured. The alloy powder is prepared so as to have a composition expressed by the formula (2). The alloy powder is prepared, for example, by pulverizing an alloy ingot obtained by casting a molten metal obtained through an arc melting method or a high-frequency melting method or by pulverizing an alloy thin strip manufactured through a molten metal rapid quenching method. Other methods of preparing the alloy powder may include a mechanical alloying method, a mechanical grinding method, a gas atomization method, and a reduction diffusion method. The alloy powder or the alloy to be pulverized may be subjected to a heat treatment, as necessary, to be homogenized.

It is preferable that the alloy ingot, the alloy thin strip, or the like be pulverized such that the mean particle size of the resulting alloy powder is 25 µm or less. When the mean particle size of the alloy powder is 25 µm or less, nitrogen is allowed to enter sufficiently into the interior of a particle, and the entire particle can be nitrided homogeneously. The alloy ingot, the alloy thin strip, or the like is pulverized with the use of, for example, a jet mill or a ball mill. It is preferable that the alloy ingot, the alloy thin strip, or the like be pulverized in an inert gas atmosphere or the like so as to prevent oxidation of the alloy powder.

Next, the alloy powder is subjected to nitriding. It is preferable that nitriding be carried out by heat-treating the alloy power in a nitrogen gas atmosphere at a pressure of 0.1 to 100 atm for 0.1 to 100 hours at a temperature of 300 to 900°C. In order to increase the homogeneity of the R(M,Cr,Si)₁₇N₃ phase, it is preferable that nitriding be carried out under the following condition: the pressure of the nitrogen gas atmosphere is 0.5 to 10 atm, the temperature is 450 to 750°C, and the treatment time is 2 to 24 hours. For the atmosphere in which the alloy powder is nitrided, a nitrogen compound gas, such as ammonia gas, may also be used in place of a nitrogen gas. It is also possible to control the nitriding reaction by using a gas in which a nitrogen gas or a nitrogen compound gas is mixed with hydrogen.

By using a nitrogen compound gas, such as ammonia, or a mixed gas of a nitrogen gas and a hydrogen gas, part of nitrogen in the permanent magnet can be replaced with hydrogen. When part of nitrogen is to be replaced with carbon or boron, the alloy powder to be subjected to nitriding may be caused to contain carbon or boron, or carbon or boron may be caused to be contained by using a mixed gas of a carbon compound gas or a boron compound gas and a nitrogen-containing gas.

When the permanent magnet of the embodiment is manufactured, it is preferable that the sintering process of the magnet material powder (nitrided power of the alloy powder) be carried out with the use of a spark plasma sintering method in which the rate of heating/cooling is set to 5°C/min or more and 20°C/min or less so as to produce a relatively gentle temperature change. The spark plasma sintering method allows rapid heating/cooling as compared to a typical sintering method and is thus a method with less heat load on the powder particles. Furthermore, with the spark plasma sintering method, a current flows selectively on the surface of the powder particles, and it is thus a method with less heat load on the interior of the powder particles. Therefore, the spark plasma sintering method is suitable for sintering a material that is prone to thermal decomposition at a high temperature, such as a Sm-Fe-N permanent magnet.

In the sintering process, first, the alloy powder (magnet material powder) is charged into a mold placed in an electromagnet or the like and is press-molded while a magnetic field is applied thereto. Thus, a compression-molded body with an oriented crystal axis is manufactured. This compression-molded body is subjected to spark plasma sintering under an appropriate condition, and thus a permanent magnet (sintered magnet) with a high density and less heterogeneous phase can be obtained.

It is preferable that the sintering process be carried out in a vacuum atmosphere or in an inert gas atmosphere, such as an argon gas. By setting the pressure applied to the powder through the mold to 1.0 to 1.5 GPa and setting the sintering temperature to 500 to 700°C in spark plasma sintering, a dense permanent magnet can be obtained. When the pressure applied to the powder through the mold is less than 1.0 GPa, a permanent magnet that is sufficiently dense cannot be obtained. The mold cannot withstand a constant pressure more than 1.5 GPa, and thus it is preferable that the upper limit of the pressure applied to the powder through the mold be 1.5 GPa. When the sintering temperature is lower than 500°C, sintering does not proceed, and a permanent magnet that is sufficiently dense cannot be obtained. When the sintering temperature exceeds 700°C, the thermal decomposition of the permanent magnet proceeds, and the permanent magnet comes to contain an α-Fe phase. Thus, the magnetic characteristics of the permanent magnet decrease notably. In the spark plasma sintering process, it is preferable that the rate of heating/cooling be 5°C/min or more and 20°C/min or less. When the rate of heating/cooling exceeds 20°C/min, the electric current which flows to the powder in the spark plasma sintering becomes large, and thermal decomposition of the permanent magnet progresses. When the rate of heating/cooling is lower than 5°C/min, the duration for which the permanent magnet is exposed to a high temperature increases, and thermal decomposition of the permanent magnet progresses. In each case, α-Fe phase precipitates in the permanent magnet, and the magnetic properties of the permanent magnet decrease.

The R-M-N permanent magnet of the embodiment contains Cr and Si and excels in thermal stability and can thus be sintered at a relatively high temperature. Furthermore, by setting the sintering condition appropriately, production of an α-Fe phase caused by the thermal decomposition of the permanent magnet can be suppressed. Therefore, a permanent magnet with a high density and less heterogeneous phase can be obtained. In this case, however, the duration for which the material for the permanent magnet is exposed to a high temperature increases, and thus the material needs to be an R-(M,Cr,Si)-N permanent magnet material with improved thermal stability.

The permanent magnet of the embodiment is evaluated in the following manner. With regard to the density of the permanent magnet, the mass of the permanent magnet is measured in the atmosphere and in water, and the density is calculated through the Archimedes' principle. The density of the permanent magnet is measured 10 times per sample, and the mean value of the obtained densities excluding the maximum value and the minimum value is calculated to be the density of the permanent magnet.

The diffraction peak intensity ratio in the X-ray diffraction is measured in the following manner. The permanent magnet is pulverized with the use of a mortar until powder having a particle size of no less than 5 µm amounts to no more than 3% by volume of the total, and then the powder is subjected to X-ray diffractometry. The X-ray diffraction of the permanent magnet is carried out through powder X-ray diffraction (XRD). Specifically, the diffraction intensity of the permanent magnet powder is measured with the use of an X-ray diffraction apparatus that includes an X-ray generator and an X-ray detector under the following condition: the tube current is 200 mA, the tube voltage is 45 kV, the measurement step width is 0.01°, and the sweep rate is 20°/min.

In the powder X-ray diffraction profile, the intensity of a peak with a maximum intensity among peaks appearing in a range in which 2θ/θ is 40 to 43°, or in other words, the intensity of a peak corresponding to (303) reflection of a Th₂Zn₁₇ phase derived from an R₂M₁₇N₃ phase is represented by I(303). The intensity of a peak with a maximum intensity among peaks appearing in a range in which 2θ/θ is 44 to 45°, or in other words, the intensity of a peak corresponding to (110) reflection derived from an α-Fe phase is represented by I(110). The value of I(110)/{I(110) + I(303)} is calculated. The value of the peak intensity is calculated as the count value at the peak angle after the contribution of a background is subtracted from the X-ray diffraction profile obtained through the measurement. At this point, the contribution of the background is estimated in the following manner. First, the count values at the measured minimum value and maximum value of 2θ/θ and the count value at an angle therebetween are selected in any number at intervals that are each not apart from a preceding point by a distance corresponding to 2θ/θ of 5° or more. The count values to be selected are at angles unrelated to the peak position. Next, a background function is determined through a β-spline method so as to pass through all of the selected measurement points. This serves as the background. The background is subtracted from the X-ray diffraction profile obtained through the measurement.

The coercive force of the permanent magnet is measured with a vibrating sample magnetometer. In the measurement of the coercive force, an external magnetic field is applied in a range of -1600 to +1600 kA/m in a direction parallel to the magnetization direction oriented before the spark plasma sintering. The value of the coercive force is calculated as a mean value of the absolute values of the magnetic fields in which the magnetization of the permanent magnet becomes zero in the positive direction and the negative direction in which the magnetic field is applied.

### (Second Embodiment)

The permanent magnet of the first embodiment can be used in a rotary electrical machine, such as a motor and an electric generator. The rotary electrical machine includes at least a stator and a rotor.

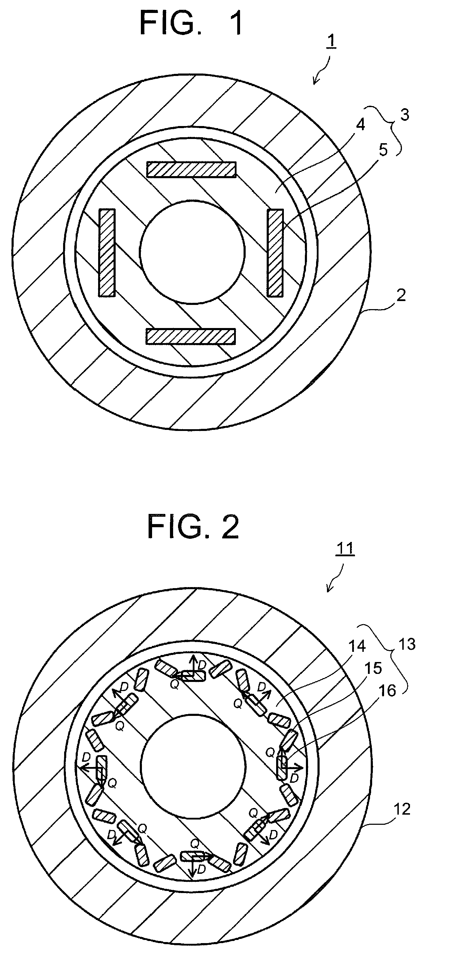

Fig. 1 illustrates a permanent magnet motor that includes a permanent magnet of an embodiment. A permanent magnet motor 1 includes a stator 2 and a rotor 3. The rotor 3 is disposed in the stator 2. The stator 2 causes the rotor 3 to rotate. The rotor 3 includes an iron core 4 and permanent magnets 5 of the embodiment. On the basis of the characteristics or the like of the permanent magnets 5, the efficiency of the permanent magnet motor 1 can be increased, the size thereof can be reduced, and the cost thereof can be reduced. The permanent magnet motor 1 is suitably used in a motor for a vehicle, such as a hybrid vehicle and an electric vehicle, for which there is a demand for a higher-power smaller-sized motor. The permanent magnet motor 1 illustrated in Fig. 1 is a rotary electrical machine.

Fig. 2 illustrates a variable magnetic flux motor that includes a permanent magnet of an embodiment. A variable magnetic flux motor 11 has a stator 12 and a rotor 13. The rotor 13 is disposed in the stator 12. The stator 12 rotates the rotor 13. The rotor 13 includes an iron core 14, stationary magnets 15, and variable magnets 16. The permanent magnet of the embodiment is used in the stationary magnets 15 and the variable magnets 16. The permanent magnet of the embodiment may be used in at least one of the stationary magnets 15 and the variable magnets 16.

The magnetic flux density (magnetic flux amount) of the variable magnets 16 can be varied. The symbol D in Fig. 2 indicates the magnetization direction (direction from S to N) of the variable magnet 16. The magnetization direction of the variable magnet 16 is referred to as a D-axis. The direction indicated by the D-axis differs for different variable magnets 16. The direction orthogonal to the D-axis is referred to as a Q-axis. The magnetic flux density (magnetic flux amount) of the variable magnet 16 is not affected by the Q-axis current that produces a magnetic field in the Q-axis direction orthogonal to the magnetization direction (D-axis direction) of the variable magnet 16. The magnetic flux density (magnetic flux amount) of the variable magnet 16 can be varied only by the D-axis current that produces a magnetic field in the D-axis direction.

The rotor 13 is provided with a magnetization winding (not illustrated). The rotor 13 is structured such that, as a current is passed to the magnetization winding, the magnetic field thereof directly acts on the variable magnets 16. The variable magnetic flux motor 11 is capable of outputting large torque even though it is a small-sized apparatus. The variable magnetic flux motor 11 is suitably used in a motor for a vehicle, such as a hybrid vehicle and an electric vehicle, for which there is a demand for a higher-power smaller-sized motor. The variable magnetic flux motor 11 illustrated in Fig. 2 is a rotary electrical machine.

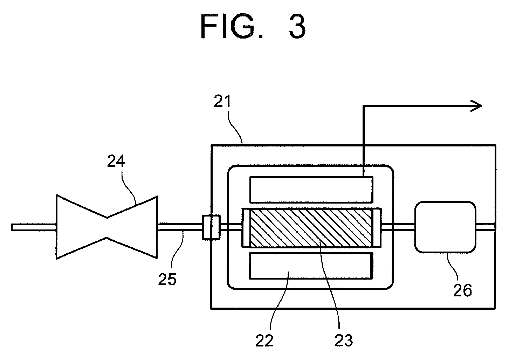

Fig. 3 illustrates an electric generator that includes a permanent magnet of an embodiment. An electric generator 21 includes a stator 22, which has the permanent magnet of the embodiment, a rotor 23, a turbine 24, a shaft 25, and a brush 26. The rotor 23 is connected to the turbine 24 with the shaft 25 interposed therebetween. The turbine 24 rotates with a fluid supplied from the outside. The shaft 25 may be rotated by transmitting dynamic rotation, such a regeneration energy of a vehicle including an automobile, instead of using the turbine 24. The shaft 25 is connected to a commutator (not illustrated) disposed at a side of the rotor 23 that is opposite to the turbine 24. The electromotive force generated by the rotation of the rotor 23 is stepped up to a system voltage and transmitted as an output of the electric generator 21 through an isolated-phase bus and a main transformer. A charge caused by a shaft current associated with the static electricity or the generation of electricity in the turbine 24 is generated in the rotor 23. The brush 26 allows the charged rotor 23 to discharge. The electric generator 21 may be either of a typical electric generator and a variable magnetic flux electric generator. The electric generator 21 illustrated in Fig. 3 is a rotary electrical machine.

### EXAMPLE

Next, examples of the permanent magnet and the evaluation results thereof will be described.

### (Example 1)

Raw materials were blended at a predetermined ratio so as to achieve a composition of Sm(Cr_{0.08}Si_{0.03}Fe_{0.89})_{8.3}. The blended raw material was subjected to arc melting in an argon gas atmosphere so as to manufacture an alloy ingot. The alloy ingot was heat-treated in an argon gas atmosphere at approximately 1000°C for approximately three days. Thereafter, the alloy ingot was pulverized with a mortar, and an alloy powder was thus obtained. The alloy powder was passed through a sieve with a sieve opening of 25 µm. The alloy powder was heat-treated in a nitrogen gas atmosphere of approximately 1 atm at 700°C for four hours, and the material powder of the target permanent magnet was thus obtained. The obtained material powder was charged into a mold while being subjected to an orientation press in a magnetic field. Then, the material powder was subjected to spark plasma sintering under the following condition: the pressure was 1.0 GPa, the sintering temperature was 600°C, and the rate of heating was 20°C/min, and the permanent magnet was thus obtained.

Table 1 shows the composition of the permanent magnet of Example 1 and the rate of heating in the sintering process. Table 1 also shows the compositions of permanent magnets manufactured in other examples and comparative examples described later and respective rates of heating.

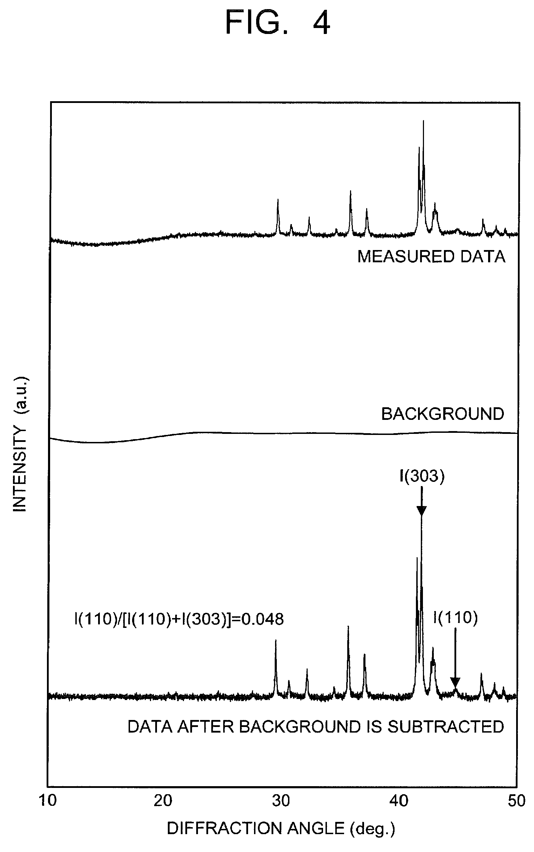

Fig. 4 illustrates an X-ray diffractometry profile of the permanent magnet of Example 1. Indicated in the data shown in Fig. 4 are, from the top, the profile of the measured data, the profile of the background, and the profile obtained by subtracting the background from the measured data. On the basis of the profiles shown in Fig. 4, a peak corresponding to (303) reflection derived from a Sm₂Fe₁₇N₃ phase and its intensity I(303) as well as a peak corresponding to (110) reflection derived from an α-Fe phase and its intensity I(110) are confirmed.

Table 2 shows the density, the value of I(110)/{I(110) + I(303)}, and the value of the coercive force of the permanent magnet manufactured in Example 1. Table 2 also shows the density, the value of I(110)/{I(110) + I(303)}, and the value of the coercive force of each of the permanent magnets manufactured in the other examples and the comparative examples described later.

As described above, to suppress the thermal decomposition of the permanent magnet, the value of I(110)/{I(110) + I(303)} was set to 0.05 or less. Furthermore, a Sm-(Fe,Cr,Si)-N permanent magnet having a density of 6.5 g/cm³ or more was obtained.

### (Examples 2-18)

Raw materials were blended at a predetermined ratio so as to achieve the compositions (excluding nitrogen) indicated in Table 1. In Examples 2-18, the permanent magnets were manufactured in a method similar to that of Example 1. The characteristics of the obtained permanent magnets were evaluated in a similar manner to that of Example 1. Table 2 shows the density, the value of I(110)/{1(110) +I(303)}, and the value of the coercive force of each of the permanent magnets of Examples 2-18.

### (Example 19)

Raw materials were blended at a predetermined ratio so as to achieve the composition (excluding nitrogen) indicated in Table 1. In Example 19, the rate of heating in spark plasma sintering was set to 10°C/min. The permanent magnet was manufactured through a method and in a condition similar to those of Example 1 except for the rate of heating in spark plasma sintering. The characteristics of the obtained permanent magnet were evaluated in a similar manner to that of Example 1. Table 2 shows the density, the value of I(110)/{I(110) +I(303)}, and the value of the coercive force of the permanent magnet of Example 19.

### (Comparative Example 1)

Raw materials were blended at a predetermined ratio so as to achieve the composition (excluding nitrogen) indicated in Table 1. In Comparative Example 1, the rate of heating in spark plasma sintering was set to 40°C/min. The permanent magnet was manufactured through a method and in a condition similar to those of Example 1 except for the rate of heating in spark plasma sintering. The characteristics of the obtained permanent magnet were evaluated in a similar manner to that of Example 1. Table 2 shows the density, the value of I(110)/{I(110) + I(303)}, and the value of the coercive force of the permanent magnet of Comparative Example 1.

### (Comparative Examples 2 and 3)

Raw materials were blended at a predetermined ratio so as to achieve the compositions (excluding nitrogen) indicated in Table 1. The blended raw material was subjected to arc melting in an argon gas atmosphere so as to manufacture an alloy ingot. The alloy ingot was heat-treated in an argon gas atmosphere at approximately 1000°C for approximately three days. The alloy ingot was pulverized with a mortar, and an alloy powder was thus obtained. The alloy powder was passed through a sieve with a sieve opening of 25 µm. The alloy powder was heat-treated in a nitrogen gas atmosphere of approximately 1 atm at 550°C for four hours, and the material powder of the permanent magnet was thus obtained. In Comparative Example 2, the material powder was charged into a mold while being subjected to an orientation press in a magnetic field. Then, the material powder was subjected to spark plasma sintering under the following condition: the pressure was 1.0 GPa, the temperature was 400°C, and the rate of heating was 20°C/min, and the permanent magnet was thus obtained. In Comparative Example 3, the material powder was charged into a mold while being subjected to an orientation press in a magnetic field. Then, the material powder was subjected to spark plasma sintering under the following condition: the pressure was 1.0 GPa, the temperature was 450°C, and the rate of heating was 20°C/min, and the permanent magnet was thus obtained.

**[Table 1]**

| | Magnet Composition (Atomic Ratio) | Rate of Heating [°C/min] |
|---|---|---|
| Example 1 | SmN_{1.23}(Cr_{0.08}Si_{0.03}Fe_{0.89})_{8.3} | 20 |
| Example 2 | SmN_{1.25}(Cr_{0.05}Si_{0.03}Fe_{0.90}Mn_{0.02})_{8.3} | 20 |
| Example 3 | SmN_{1.46}(Cr_{0.08}Si_{0.04}Fe_{0.85}Ni_{0.03})_{8.5} | 20 |
| Example 4 | SmN_{1.31}(Cr_{0.07}Si_{0.03}Fe_{0.86}Zr_{0.04})_{8.4} | 20 |
| Example 5 | SmN_{1.28}(Cr_{0.07}Si_{0.02}Fe_{0.89}Nb_{0.02})_{8.3} | 20 |
| Example 6 | SmN_{1.19}(Cr_{0.08}Si_{0.03}Fe_{0.89}Al_{0.03})_{7.2} | 20 |
| Example 7 | SmN_{1.22}(Cr_{0.08}Si_{0.03}Fe_{0.89}Ga_{0.04})_{7.2} | 20 |
| Example 8 | Sm_{0.90}Pr_{0.10}N_{1.08}(Cr_{0.08}Si_{0.04}Fe_{0.88})_{7.1} | 20 |
| Example 9 | .Sm_{0.89}Nd_{0.11}N_{1.10}(Cr_{0.88}Si_{0.03}Fe_{0.89})_{7.1} | 20 |
| Example 10 | Sm_{0.90}Ce_{0.10}N_{1.20}(Cr_{0.08}Si_{0.03}Fe_{0.89})_{7.5} | 20 |
| Example 11 | Sm_{0.91}La_{0.09}N_{1.21}(Cr_{0.08}Si_{0.03}Fe_{0.87}Cu_{0.02})_{7.6} | 20 |
| Example 12 | Sm_{0.88}Pr_{0.12}N_{1.01}(Cr_{0.09}Si_{0.03}Fe_{0.85}Zn_{0.03})_{7.0} | 20 |
| Example 13 | Sm_{0.81}Pr_{0.09}Nd_{0.010}N_{1.05}(Cr_{0.06}Si_{0.05}Fe_{0.89})_{7.1} | 20 |
| Example 14 | SmN_{0.63}B_{0.02}(Cr_{0.10}Si_{0.01}Fe_{0.89})_{7.5} | 20 |
| Example 15 | SmN_{0.88}B_{0.02}(Cr_{0.11}Si_{0.02}Fe_{0.85}Al_{0.02})_{7.8} | 20 |
| Example 16 | SmN_{1.14}C_{0.01}(Cr_{0.06}Si_{0.02}Fe_{0.92})_{8.0} | 20 |
| Example 17 | SmN_{1.07}C_{0.01}(Cr_{0.07}Si_{0.01}Fe_{0.88}Al_{0.04})_{8.1} | 20 |
| Example 18 | SmN_{1.30}(Cr_{0.10}Si_{0.03}Fe_{0.85}Ti_{0.02})_{8.5} | 20 |
| Example 19 | SmN_{1.25}(Cr_{0.08}Si_{0.03}Fe_{0.89})_{8.4} | 10 |
| Comparative Example 1 | SmN_{1.25}(Cr_{0.08}Si_{0.03}Fe_{0.89})_{8.3} | 40 |
| Comparative Example 2 | SmN_{1.31}Fe_{8.5} | 20 |
| Comparative Example 3 | SmN_{1.42}Fe_{8.0} | 20 |

**[Table 2]**

| | Density [g/cm³] | I(110)/{I(110) + I(303)} | Coercive Force [kA/m] |
|---|---|---|---|
| Example 1 | 6.8 | 0.048 | 800 |
| Example 2 | 6.6 | 0.018 | 820 |
| Example 3 | 6.7 | 0.042 | 810 |
| Example 4 | 6.8 | 0.010 | 900 |
| Example 5 | 6.6 | 0.011 | 890 |
| Example 6 | 6.8 | 0.006 | 940 |
| Example 7 | 6.6 | 0.008 | 920 |
| Example 8 | 6.9 | 0.004 | 960 |
| Example 9 | 6.9 | 0.005 | 950 |
| Example 10 | 6.9 | 0.007 | 930 |
| Example 11 | 7.0 | 0.010 | 900 |
| Example 12 | 7.1 | 0 | 1000 |
| Example 13 | 7.1 | 0.005 | 950 |
| Example 14 | 7.0 | 0.009 | 800 |
| Example 15 | 7.0 | 0.012 | 820 |
| Example 16 | 6.9 | 0.014 | 840 |
| Example 17 | 6.8 | 0.013 | 870 |
| Example 18 | 6.8 | 0.020 | 800 |
| Example 19 | 6.9 | 0.017 | 830 |
| Comparative Example 1 | 7.0 | 0.105 | 150 |
| Comparative Example 2 | 6.4 | 0.068 | 320 |
| Comparative Example 3 | 6.9 | 0.071 | 290 |

Table 2 reveals that the permanent magnets of Examples 1-19 all have a high density of no less than 6.5 g/cm³. On the basis of Table 2, it is confirmed that the permanent magnets of Examples 1 to 19 have a very small value of I(110)/{I(110) + I(303)} and are permanent magnets formed of a substantially homogeneous RNₓ(M,Cr,Si)₁₇ phase. The permanent magnets of Examples 1 to 19 have produced less α-Fe phase than Comparative Examples 1 to 3, and thus it is also confirmed that a high coercive force of 800 to 1000 kA/m can be obtained. The residual magnetization of the permanent magnets of Examples 1 to 19 is 0.9 to 1.1 T.

It is to be noted that, although some embodiments of the present invention have been described, these embodiments have been presented by way of example and are not intended to limit the scope of the invention. These novel embodiments can be implemented in a variety of other modes, and various omissions, substitutions, and modifications thereof can be made within the scope that does not depart from the spirit of the invention. Such embodiments and modifications thereof are encompassed by the scope and the spirit of the invention and also encompassed by the invention set forth in the claims and equivalents thereof

## Claims

1. A permanent magnet comprising a composition expressed by a composition formula:
RNₓ(CrₚSi_{q}M_{l-p-q})_{z},
wherein R is at least one element selected from a first group consisting of Y and rare-earth elements, M is at least one element selected from a second group consisting of Fe and Co, x is an atomic ratio satisfying 0.5 ≤ x ≤ 2.0, p is an atomic ratio satisfying 0.005 ≤ p ≤ 0.2, q is an atomic ratio satisfying 0.005 ≤ q ≤ 0.2, z is an atomic ratio satisfying 4 ≤ z ≤ 13,
wherein a density of the permanent magnet is 6.5 g/cm³ or more, and
the permanent magnet satisfies a relationship of I(110)/{I(110) + I(303)} < 0.05, wherein I(303) represents a diffraction peak intensity from a (303) plane of a Th₂Zn₁₇ phase obtained through powder X-ray diffraction of the permanent magnet, and I(110) represents a diffraction peak intensity from a (110) plane of an α-Fe phase obtained through the powder X-ray diffraction.

2. The permanent magnet of claim 1, wherein 50 atomic% or more of a amount of the element R in the composition formula is Sm.

3. The permanent magnet of claim 1, wherein 50 atomic% or more of a amount of the element M in the the composition formula is Fe.

4. The permanent magnet of claim 1, wherein 20 atomic% or less of a amount of the element M in the the composition formula is replaced with at least one element selected from a third group consisting of Ti, Zr, Hf, V, Nb, Ta, Mo, W, Mn, Ni, Cu, Zn, Al, Ga, and Ge.

5. The permanent magnet of claim 1, wherein 50 atomic% or less of a amount of the N in the the composition formula is replaced with at least one element selected from a fourth group consisting of H, B, and C.

6. A rotary electrical machine, comprising:
a rotor;
a stator; and
the permanent magnet of claim 1 disposed in the rotor or the stator.

7. The rotary electrical machine of claim 6, wherein the rotary electrical machine is a motor or an electric generator.

8. The rotary electrical machine of claim 6, wherein the rotary electrical machine is an electric generator, and the rotor is connected to a turbine with a shaft interposed therebetween.

9. A vehicle comprising the rotary electrical machine of claim 6.

10. The vehicle of claim 9, wherein the rotary electrical machine is an electric generator, and the rotor is connected to a shaft to which rotations are transmitted.
